(19) Europäisches Patentamt
European Patent Office
Office européen des brevets

(11) **EP 4 376 254 A1**

(12) **EUROPEAN PATENT APPLICATION**
published in accordance with Art. 153(4) EPC

(43) Date of publication:
**29.05.2024 Bulletin 2024/22**

(51) International Patent Classification (IPC):
*H02J 7/34* (2006.01)  *H02J 1/00* (2006.01)
*H02J 1/10* (2006.01)  *H02J 1/14* (2006.01)

(21) Application number: **21956756.7**

(52) Cooperative Patent Classification (CPC):
**H02J 1/00; H02J 1/10; H02J 1/14; H02J 7/34**

(22) Date of filing: **08.09.2021**

(86) International application number:
**PCT/JP2021/033056**

(87) International publication number:
**WO 2023/037459 (16.03.2023 Gazette 2023/11)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Tohoku University**
**Sendai-shi, Miyagi 980-8577 (JP)**

(72) Inventors:
• YAMADA, Hirohito
  Sendai-shi, Miyagi 980-8577 (JP)
• YASHIMA, Masafumi
  Sendai-shi, Miyagi 980-8577 (JP)
• OTSUJI, Taiichi
  Sendai-shi, Miyagi 980-8577 (JP)
• IWATSUKI, Katsumi
  Sendai-shi, Miyagi 980-8577 (JP)

(74) Representative: **Dragotti & Associati S.R.L.**
**Via Nino Bixio, 7**
**20129 Milano (IT)**

(54) **AUTONOMOUS COOPERATIVE CONTROL SYSTEM AND AUTONOMOUS COOPERATIVE CONTROL METHOD**

(57)    The stability of a power system using a DC bus is improved. According to an aspect of an embodiment of the invention, the following autonomous cooperative control system is provided. The autonomous cooperative control system includes: a DC bus to which a power load and a generator are connected; and a plurality of battery units directly connected to the DC bus. The plurality of battery units are distributed and loaded on the DC bus. A terminal voltage of each battery unit is consistent with or approximates to a reference voltage of the DC bus.

[FIG. 1]

EP 4 376 254 A1

## Description

Technical Field

The present invention relates to an autonomous cooperative control system and an autonomous cooperative control method.

Background Art

In recent years, there has been an increasing interest in a microgrid in many countries in the world. The microgrid is a smart power system including a renewable energy generator (for example, a solar generator, a wind generator, and a geothermal generator), a battery, and a power load (for example, a general home, a factory, a commercial facility, and a charging station of an electric vehicle (EV)), and the like.

The renewable energy generator mainly outputs direct current (DC) power. Therefore, in an alternative current (AC) grid in which a generator, a battery, and a power load are connected using an AC bus, energy conversion loss occurs when converting DC to AC, and synchronization with a voltage phase of the AC bus is necessary. Therefore, many microgrids employ a DC grid in which a generator, a battery, and a power load are connected using a DC bus (see Patent Literature 1 and Non Patent Literature 1).

Since a power supply from the renewable energy generator is unstable, many microgrids attempt to stabilize a voltage of the DC bus by controlling a generator, a battery, and a power load that are connected to the DC bus through central control, distributed control, or a combination thereof by a controller. In addition, the controller connects the DC bus to a power system when power consumption of the power load rapidly increases and the voltage of the DC bus decreases to a certain lower limit level (see Non Patent Literature 1). Furthermore, patent Literature 1 discloses a method in which a voltage conversion unit is provided between a DC bus and a storage battery, and the voltage conversion unit is controlled to start a charging operation when a voltage of the DC bus increases to be equal to or higher than a threshold value and stop the charging operation when the voltage of the DC bus is equal to or lower than the threshold value.

Citation List

Patent Literature

Patent Literature 1: JP2014-128047A

Non Patent Literature

Non Patent Literature 1: Fahad Saleh Al-Ismail, "DC Microgrid Planning, Operation, and Control: A Comprehensive Review", IEEE Access, Volume 9, pp. 36154-36172.

Summary of Invention

Technical Problem

Even when a DC bus voltage is stabilized to a certain extent by performing complicated control as in various systems described in Patent Literature 1 and Non-Patent Literature 1, the DC bus voltage may become unstable due to a sudden increase or decrease in the power load. Therefore, the DC bus needs to have a certain degree of electrical inertia. The electrical inertia refers to the ability of a bus to instantaneously generate or absorb power when a magnitude of a power load suddenly changes and a large amount of power is instantaneously required or surplus.

The present inventor considers that one way to provide electrical inertia to a DC bus is to directly load a battery in the DC bus when a large amount of power is suddenly required or surplus. As another method, a method is considered in which a photovoltaic (PV) device is deliberately operated in a state outside of a maximum output state thereof, and when a large amount of power is suddenly required or surplus, the PV device instantaneously shifts to an operation at maximum output or an operation with further reduced output, and causes generated power to increase or decrease, thereby generating pseudo-electrical inertia.

In the system of Patent Literature 1, since the storage battery is connected to the DC bus via the voltage conversion unit, the electrical inertia is less likely to be effective, and the electrical inertia is relatively small. Therefore, an effect of preventing a voltage fluctuation by the battery is limited. In addition, in the systems of Patent Literature 1 and Non-Patent Literature 1, there is a risk that the voltage of the DC bus temporarily falls to be less than a lower limit level or exceeds an upper limit level due to transmission delay of a control signal input to and output from the controller, or the like, and thus it is difficult to cope with a sudden increase or decrease in the power load. Therefore, in order to ensure a stable operation of the power system, it is necessary to more effectively prevent the voltage fluctuation of the DC bus with respect to the sudden increase or decrease in the power load.

Solution to Problem

According to a first aspect of the invention, an autonomous cooperative control system is provided. The autonomous cooperative control system includes: a DC bus to which a power load and a generator are connected; and a plurality of battery units directly connected to the DC bus. The plurality of battery units is distributed and loaded on the DC bus. A terminal voltage of each battery unit is consistent with or approximates to a reference voltage of the DC bus.

According to a second aspect of the invention, an autonomous cooperative control method is provided. The autonomous cooperative control method includes: a step of measuring, using a voltmeter, a voltage of a DC bus to which a power load, a generator, and a plurality of battery units are connected, in which the plurality of battery units are distributed and loaded on the DC bus, and a terminal voltage of each battery unit is consistent with or approximates to a reference voltage of the DC bus; a step of, when the voltage of the DC bus reaches an upper limit or a lower limit of a first voltage range from within the first voltage range centering on the reference voltage, a control circuit connecting the DC bus to a power system and switching the DC bus to an assist driving state in which the DC bus operates with assist from the power system; and

a step of, when the voltage of the DC bus reaches a boundary of a specific range within the first voltage range in the assist driving state, the control circuit disconnecting the DC bus from the power system and switching the DC bus to an autonomous driving operation in which operation is performed without the assist from the power system, in which in the autonomous driving operation, at least a part of the generators connected to the DC bus monitors the voltage of the DC bus and performs an autonomous operation of stopping power generation or power supply to the DC bus when the voltage of the DC exceeds a preset upper limit level.

Advantageous Effects of Invention

According to the invention, the stability of a power system using a DC bus can be improved.

Brief Description of Drawings

[FIG. 1] FIG. 1 is a diagram schematically showing an example of an autonomous cooperative control system according to an embodiment of the invention.
[FIG. 2] FIG. 2 is a diagram schematically showing an example of a DC bus according to the embodiment of the invention.
[FIG. 3] FIG. 3 is a diagram schematically showing an example of an equivalent circuit of the DC bus according to the embodiment of the invention.
[FIG. 4] FIG. 4 is a diagram showing attenuation characteristics of electrical inertia and a relationship between a thickness of a power line and an attenuation speed.
[FIG. 5] FIG. 5 is a diagram showing a relationship between the number of battery units loaded on the DC bus and strength of the electrical inertial at each position on the DC bus.
[FIG. 6] FIG. 6 is a diagram schematically showing arrangements of the battery units corresponding to graphs of N = 1 to 5 shown in FIG. 8.
[FIG. 7] FIG. 7 is a block diagram schematically showing a structural example of a switch according to the embodiment of the invention.
[FIG. 8] FIG. 8 is a diagram showing an example of an autonomous cooperative control method according to the embodiment of the invention.
[FIG. 9] FIG. 9 is a diagram showing a simulation model of the autonomous cooperative control system.
[FIG. 10] FIG. 10 is a diagram showing simulation results.
[FIG. 11] FIG. 11 is a diagram showing a first stability condition of the DC bus according to the embodiment of the invention.
[FIG. 12] FIG. 12 is a diagram showing a second stability condition of the DC bus according to the embodiment of the invention.

Description of Embodiments

Hereinafter, an embodiment of the invention will be described with reference to the accompanying drawings. In the present description and drawings, elements having substantially the same functions are denoted by the same reference numerals, and a redundant description thereof may be omitted.

(1. Autonomous Cooperative Control System)

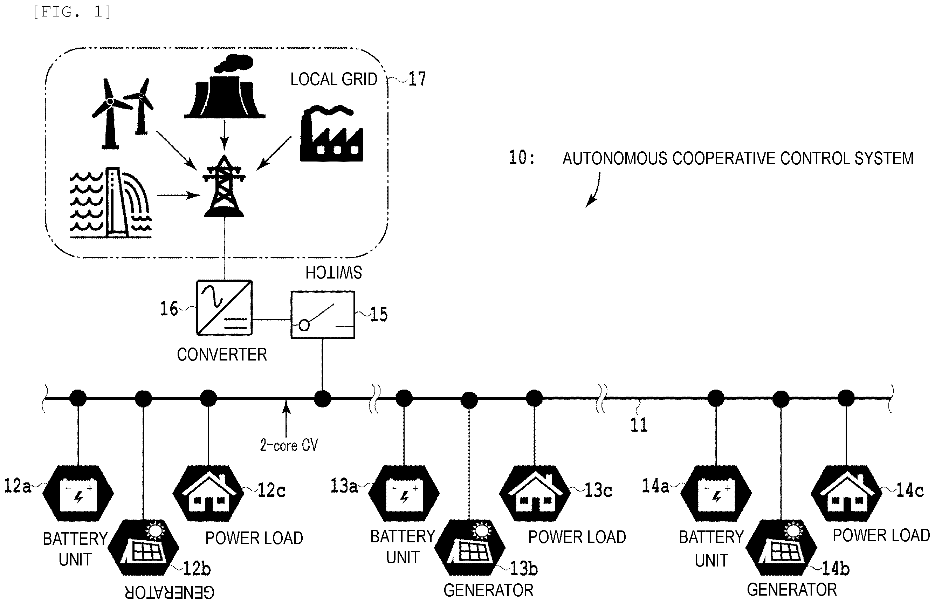

First, an autonomous cooperative control system according to the embodiment of the invention will be described. FIG. 1 is a diagram schematically showing an autonomous cooperative control system 10. The autonomous cooperative control system 10 shown in FIG. 1 is an example of the autonomous cooperative control system according to the embodiment of the invention, and an application scope of the technology according to the embodiment of the invention is not limited to this example.
The autonomous cooperative control system 10 includes a DC bus 11 to which one or more power loads and one or more generators are connected, and a plurality of battery units directly connected to the DC bus 11. The generator is a renewable energy generator such as a solar generator (a PV device or the like), a wind generator, or a geothermal generator. The power load is a power consumption facility such as a general home, a factory, a commercial facility, and a charging station of an EV.
In FIG. 1, three battery units 12a, 13a, 14a are schematically shown as an example of the plurality of battery units connected to the DC bus 11. Furthermore, in FIG. 1, generators 12b, 13b, and 14b are schematically shown as an example of one or more generators, and power loads 12c, 13c, and 14c are schematically shown as an example of one or more power loads. The numbers of battery units, generators, and power loads are not limited to this example, and may be other than three. Hereinafter, elements and operations of the autonomous cooperative control system 10 will be specifically described.

(1-1. Regarding DC Bus and Battery Unit)

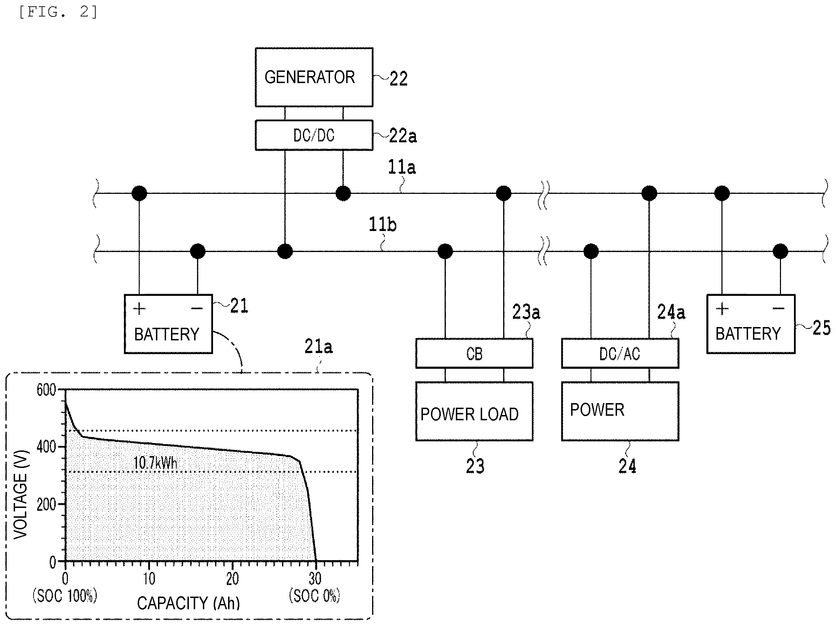

As shown in FIG. 2, the DC bus 11 includes at least two power lines 11a and 11b. FIG. 2 is a diagram schematically showing an example of the DC bus according to the embodiment of the invention. For example, the DC bus 11 may be implemented by a 5.5SQ 2-core CV cable (a cross-linked polyethylene insulated vinyl sheath cable), that is, a 2-core CV cable with a core cross-sectional area of about 5.5 mm$^2$. A voltage of the DC bus 11 is maintained within a preset voltage range (an allowable voltage range) centering on a prescribed voltage level (a reference voltage) by a control mechanism within the autonomous cooperative control system 10, which will be described later. The reference voltage may be set to 400 V, for example.

As shown in FIG. 2, each battery unit is directly connected to the power lines 11a and 11b of the DC bus 11. Each battery unit is configured such that a terminal voltage thereof is substantially equal to the reference voltage of the DC bus 11. For example, two batteries with 60 battery cells of 3.2 V connected in series are prepared, and the two batteries are connected to obtain one battery unit having a terminal voltage of 384 V (about 400 V).

As the battery of each battery unit, a lithium ion battery such as a lithium iron phosphate (LiFePO) battery or a lead acid battery or the like can be suitably used. The lithium ion battery and the lead acid battery have a characteristic (so-called drooping characteristic) in which the terminal voltage monotonically decreases as the power load increases. In addition, when a state of charge (SOC) is within a certain range, the lithium ion battery and the lead acid battery have a characteristic (see a graph 21a in FIG. 2) in which the terminal voltage substantially changes linearly with respect to the SOC. Based on these characteristics, a stable operation can be obtained with respect to a load fluctuation, and the state of charge can be easily estimated from the terminal voltage.

The plurality of battery units are distributed and loaded on the DC bus 11 in order to increase electrical inertial of the DC bus 11. The electrical inertia represents the difficulty of a change in the voltage of the DC bus 11 with respect to a rapid increase in a power consumption amount by the power load and a rapid increase in a power supply amount by the generator. For example, electrical inertia f1 of the DC bus 11 in which the voltage of the DC bus 11 changes by ΔV1 when there is a sudden current fluctuation of 1 A in the power load is smaller than electrical inertia f2 of the DC bus 11 in which the voltage of the DC bus 11 changes by ΔV2 (ΔV1 > ΔV2) under the same condition. This means that the DC bus 11 having the electrical inertia f2 is more stable than the DC bus 11 having the electrical inertia f1.

(1-2. Regarding Electrical Inertia)

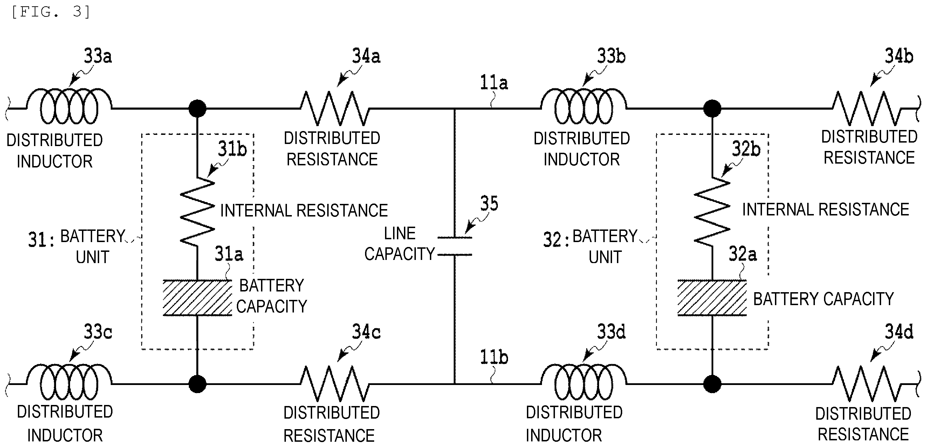

Here, a source of the electrical inertial of the DC bus 11 will be further described with reference to FIG. 3. FIG. 3 is a diagram schematically showing an example of an equivalent circuit of the DC bus on which battery units (storage batteries) are distributed and loaded.

The example in FIG. 3 schematically shows an equivalent circuit of the DC bus 11 to which two battery units 31 and 32 are connected. The battery unit 31 is represented by a battery capacity 31a and an internal resistance 31b. Similarly, the battery unit 32 is represented by a battery capacity 32a and an internal resistance 32b. The inductance and resistance of the power line 11a are represented by distributed inductors 33a and 33b and distributed resistances 34a and 34b, respectively. Similarly, the inductance and resistance of the power line 11b are represented by distributed inductors 33c and 33d and distributed resistances 34c and 34d, respectively. A capacity between the power lines 11a and 11b is expressed by a line capacity 35.

When the terminal voltages of the battery units 31 and 32 are equal to the reference voltage of the DC bus 11, the electrical inertia increases as the internal resistances 31b and 32b of the battery units 31 and 32 decrease, and inversely, the electrical inertia decreases as the internal resistances 31b and 32b increase. The electrical inertia of the DC bus 11 is also related to distributed resistances 34a, 34b, 34c, and 34d of the power lines 11a and 11b. For example, the smaller the distance between a connection point of the power loads and a connection point of the battery units 31 and 32 (that is, the smaller the resistances of the power lines 11a and 11b) is, the larger the electrical inertia is.

The power load may be connected to any point (place) on the DC bus 11, and when the battery unit is intensively loaded in one place, the electrical inertia does not sufficiently act against a rapid increase in power consumption in the power load far from the battery unit. On the other hand, when a plurality of battery units are distributed and loaded in a plurality of locations on the DC bus 11, even when power consumption rapidly increases in the power load loaded in any location on the DC bus, expected electrical inertia acts, and a rapid voltage decrease of the DC bus 11 can be prevented. Similarly, the renewable energy generator such as a PV may be connected to any point on the DC bus, and even when the power supply from any generator rapidly increases, a rapid voltage increase of the DC bus 11 can be prevented by the electrical inertia in a case where the battery units are distributed and loaded on the DC bus 11.

For the above reasons, the embodiment of the invention employs a configuration in which a plurality of battery units are distributed and loaded on the DC bus 11. A method of loading the battery units (the number and an arrangement of the battery units) can be determined based on required strength of the electrical inertia. For example, the method of loading the battery units may be determined by simulation or the like such that the voltage of the DC bus 11 is normally maintained within the allowable voltage range by using control of connecting the DC bus 11 to a power system as necessary in an assumed environment.

As described above, the electrical inertia is important for stably operating the DC bus 11. Further, in addition to the effect of preventing the voltage fluctuation of the DC bus 11 due to the rapid fluctuation of the power consumption of the power load and/or the power generated by the generator such as a PV, it is also important to prevent a long-term voltage fluctuation for stable operation of the DC bus 11. A time during which the electrical inertia can be maintained becomes longer as the battery capacities 31a, 32a of the battery units 31, 32 are larger, and becomes shorter as the battery capacities 31a, 32a are smaller. That is, as the capacity of each battery unit increases, the voltage fluctuation of the DC bus 11 with respect to the fluctuation of the power consumption and the power generation amount can be prevented for a long period of time.

From the above, it can be said that a magnitude of the electrical inertia is determined by the electrical resistance of the battery unit or the like, and a duration of the electrical inertia is determined by the battery capacity.

As described above, by distributing and loading the plurality of battery units on the DC bus 11, the electrical inertia effectively acts at any location on the DC bus 11, and the DC bus 11 can be stably operated. Furthermore, by increasing the capacity of each battery unit, the inertia duration becomes longer, which contributes to stable operation of the DC bus 11 for a longer period of time. Note that as in the systems described in Patent Literature 1 and Non-Patent Literature 1, when the battery is indirectly connected to the DC bus via a DC/DC converter or the like, the electrical inertia of the battery is less likely to be effective, and the electrical inertia is relatively small, and thus the effect of preventing the voltage fluctuation by the battery is limited.

Here, with respect to the electrical inertia described above, a further description will be added such that the characteristics thereof can be better understood.

First, in order to make it easy to intuitively understand the electrical inertia described above, a simple consideration will be given to electrical "inertia" using an existing power network as an example, which is temporarily separated from the discussion on the DC bus.

A source of inertia in an existing power network is a power plant located at the most upstream of the power network. For example, in the case of a thermoelectric power plant, a generator is rotated by rotating a large steam turbine. The turbine has a large inertia moment due to a heavy rotating body rotating at high speed. Therefore, even when a large power load is suddenly applied and a force for decelerating the rotation of the turbine is applied, the rotation can be continued due to the large inertia moment without significantly reducing a rotation speed. Assuming that the inertia moment of the rotating body of the turbine is M and a rotational angular speed is ω, energy K from a rotational motion of the turbine is given by the following equation (Math. 1).

[Math. 1]

$$K = \frac{1}{2}M\omega^2$$

At a power plant, the energy from the rotational motion of the turbine is converted into electric energy by a generator, which is then stepped down at several substations along the way and finally delivered to a power load. Here, consider a case where a power load is suddenly connected to a power transmission line having a baseline voltage of V and a current of I(A) is extracted. In this case, power P consumed by the power load is P = VI. According to the law of conservation of energy, the power P should be equal to a change in rotational energy of the turbine of the power plant over time, unless power transmission loss in a power transmission line along the way and voltage conversion loss in a substation are taken into account. Therefore, there is the following relationship (Math. 2) between the power P and an inertia moment M of the rotating body of the turbine.

[Math. 2]

$$P = \frac{dK}{dt} = M\omega\frac{d\omega}{dt}$$

It is understood from the above relationship that the strength of the inertia (the inertia moment M) acting against the force that causes the connected power load to reduce the rotational speed of the turbine is proportional to the power P that can be extracted by the connected power load. Therefore, it is understood that characteristics of the electrical inertia can be evaluated by using maximum power $P_{max}$ that can be instantaneously extracted at the time of connection by the power load connected to the power line. Following this, the characteristics of the electrical inertia on the DC bus will be further considered using $P_{max}$ in the following

First, one battery unit is directly loaded on a DC bus, and a DC bus in which the battery unit is integrated with a power line is considered. Assuming that the reference voltage of the DC bus is expressed as V (the terminal voltage of the battery unit in a no-load state is also equal to V) and the internal resistance of the battery unit is expressed as r, when one power load is connected to a certain position on the DC bus, $P_{max}$ is given by the following equation (Math. 3). r' in the equation represents an electrical resistance due to a power line from the battery unit to a connection point of the power load.

[Math. 3]

$$P_{max} = \frac{1}{4} \frac{V^2}{r + r'}$$

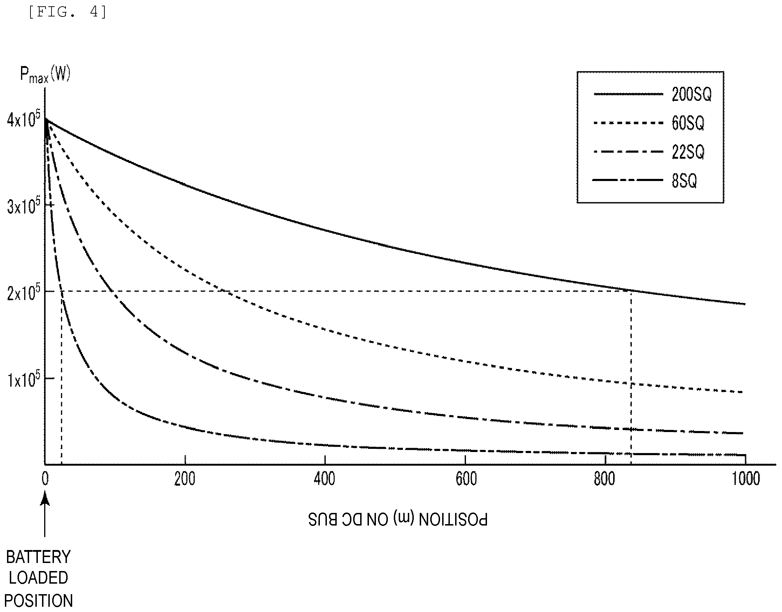

It is understood that the electrical inertia varies depending on a position on the DC bus, since the electrical resistance r' due to the power line depends on a distance from the battery unit to the connection point of the power load. It is also understood from the above equation (Math. 3) that the electrical inertia becomes weaker as the distance from the battery unit increases. For example, when V = 400 (V), r = 1 ($\Omega$), and r' = 1 ($\Omega$), $P_{max}$ = 2 $\times$ $10^4$ (W), and when r' = 4 ($\Omega$), $P_{max}$ = 0.8 $\times$ $10^4$ (W). In addition, the electrical resistance r' due to the power line also depends on a core wire cross-sectional area of the power line. The larger the core wire cross-sectional area is, the smaller the electrical resistance dr per unit length is. Therefore, by using a CV cable having a larger core wire cross-sectional area, the electrical inertia can be applied to a position far from the battery unit. Regarding this point, FIG. 4 shows characteristic changes of $P_{max}$ due to differences in the core wire cross-sectional area.

Graphs in FIG. 4 are obtained by comparing characteristic changes of $P_{max}$ on a condition that a total length of the DC bus is 1 km, the reference voltage V is 400 (V), the internal resistance of the battery unit is 0.1 ($\Omega$), and one battery unit is disposed at one end (position of 0 m) on the DC bus. The core wire cross-sectional areas of the compared CV cables are 8SQ (2 $\times$ dr = 4.34 $\Omega$/km), 22SQ (2 $\times$ dr = 1.08 $\Omega$/km), 60SQ (2 $\times$ dr = 0.397 $\Omega$/km), and 200SQ (2 $\times$ dr = 0.121 $\Omega$/km).

It is understood that in both graphs, $P_{max}$ drops as the distance from the battery unit increases, and when comparing the cases of 8SQ and 200SQ, $P_{max}$ maintains 2 $\times$ $10^5$ (W) or more at 200SQ even when the distance from the battery unit is 800 (m), but $P_{max}$ drops to 2 $\times$ $10^5$ (W) or less at a distance of 50 (m) or less in the case of 8SQ. Thus, the electrical inertia depends on the core wire cross-sectional area of the power line in addition to the distance from the battery unit. Therefore, in order to cause the electrical inertia to act on the DC bus fully, in addition to the number and arrangement of the battery units, the core wire cross-sectional area of the power line is one important factor.

On the other hand, when the core wire cross-sectional area of the power line is determined, a range on the DC bus where the electrical inertia by the individual battery units acts with sufficient strength is also determined to some extent. As described above, the strength of the electrical inertial is affected not by the capacity of each battery unit but mainly by the distance between the battery unit and the connection point of the power load (that is, the electrical resistance). However, the capacity of each battery unit mainly affects the duration of the action of the electrical inertia. Therefore, in order to apply sufficient electrical inertia to the power load connected to any position on the DC bus, it is important to arrange an appropriate number of battery units at appropriate positions on the DC bus.

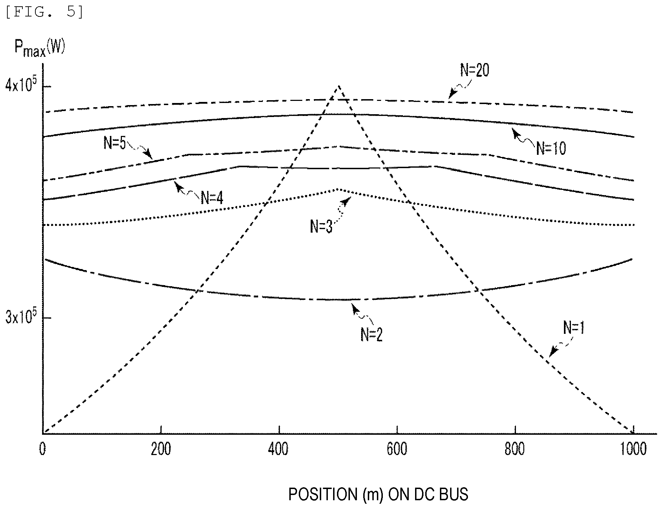

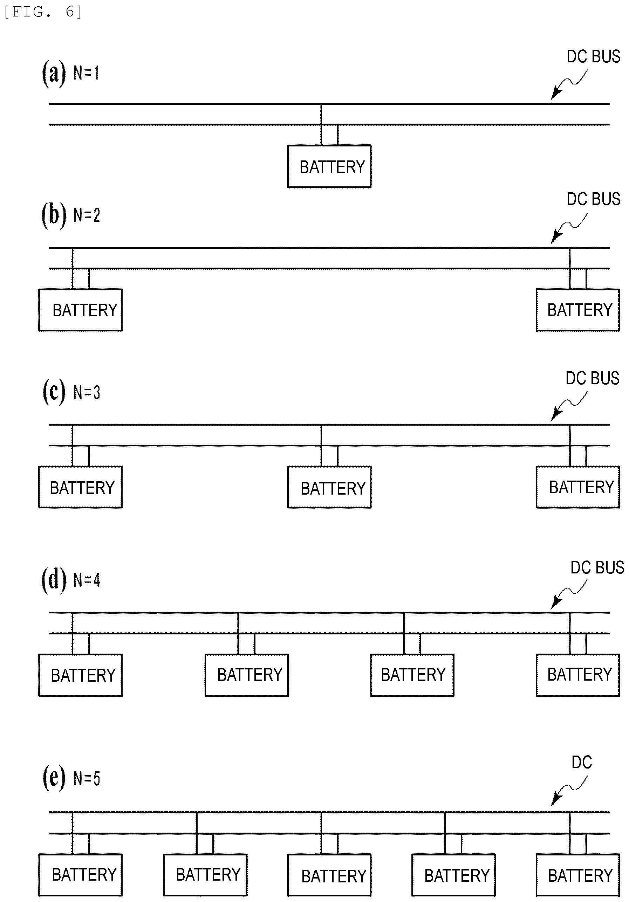

Here, a model in which battery units are arranged on a DC bus at equal intervals is used to examine characteristic changes of $P_{max}$ due to differences in the number N of battery units. FIG. 5 shows calculation results of $P_{max}$ for the cases where N = 1 to 5, 10, and 20. Note that with respect to the cases where N = 1 to 5, an arrangement example of the battery unit is shown in (a) to (e) of FIG. 6. In the case (a) of N = 1, the battery unit is arranged at a center of the DC bus, and in the case (b) of N = 2, the battery units are arranged one by one at both ends of the DC bus. In the case of N = 3 to 5, as shown in (c) to (e) of FIG. 6, the battery units are arranged at the same interval. Similarly, the cases of N = 10 and 20 are arranged such that the intervals of the battery units are equal. However, the arrangement examples are an example, and the application range of the invention is not limited thereto.

Referring to FIG. 5, in the case of N = 1, $P_{max}$ has a peak at a position on the DC bus where the battery unit is disposed, and a value of $P_{max}$ greatly decreases with distance from the position. When $P_{max}$ = 3 $\times$ $10^5$ (W) or more is required for stable operation of the DC bus, the condition is not satisfied at a position 300 m or more away from the battery unit in the case of N = 1. On the other hand, in the case of N = 2, $P_{max}$ is equal to or greater than 3 $\times$ $10^5$ (W) over the entire DC bus, and the sufficient electrical inertia acts regardless of where a power load is connected to the DC bus. It is understood that when N increases, the value of $P_{max}$ on the DC bus increases, and the electrical inertia acts more strongly. As in the case of N = 10 and 20, when N further increases, the value of $P_{max}$ approaches a substantially constant level over the entire DC bus.

In this way, by distributing and loading the plurality of battery units on the DC bus, the sufficient electrical inertia can be applied across the entire DC bus or the entire necessary region, and the stable operation of the DC bus can be implemented. Such an effect cannot be obtained when the battery units are intensively loaded in one place (see the case of N = 1). Therefore, in order to implement the stable operation of the DC bus by the electrical inertia, it is necessary to distribute and arrange the plurality of battery units on the DC bus and directly load each battery unit on the DC bus. Further, it is preferable to use a thicker power line.

(1-3. Regarding Generator and Power Load)

Referring again to FIG. 2, as described above, the battery units of the autonomous cooperative control system 10 are distributed and loaded on the DC bus 11 and directly connected to the power lines 11a and 11b of the DC bus 11. On the other hand, the generator and power loads are indirectly connected to the DC bus 11 and operate autonomously, like the generator 22 and power loads 23 and 24 shown in FIG. 2.

In the example in FIG. 2, the generator 22 is connected to the DC bus 11 via a DC/DC converter 22a. When the DC bus 11 is not connected to the power system (in the case of an off-grid), the generator 22 monitors the voltage of the DC bus 11, and stops power generation or the DC/DC converter 22a stops power supply to the DC bus 11 when the voltage of the DC bus 11 exceeds a preset upper limit level. This autonomous operation can reduce the risk of an abnormal increase in the voltage of the DC bus 11. On the other hand, when the DC bus 11 is connected to the power system (in the case of an on-grid), the power generator 22 does not need to perform the above-described autonomous operation since the surplus power which cannot be consumed and cannot be stored among the generated power is absorbed by the power system. In this case, the generator 22 can cause all the generated power to flow into the DC bus 11.

On the other hand, it is desirable that the power load connected to the DC bus 11 is freely supplied with necessary power from the DC bus 11 when necessary. Therefore, the autonomous operation is not adapted. However, in order to avoid a blackout, it is preferable that the power load 23 is connected to the DC bus 11 via an externally controllable circuit breaker (CB) 23a that can be forcibly disconnected from a bus in an emergency or an abnormality. The CB 23a has a function of blocking power supply from the DC bus 11 to the power load 23 when the voltage of the DC bus 11 is lower than a certain abnormal level. Note that the abnormal level may be set to a level significantly lower than a lower limit value LV1 of a first voltage range to be described later, and may be set to a level lower than a lower limit value LV2 of an allowable voltage range (a third voltage range to be described later) allowable in an existing power system.

When connecting the AC-driven power load 24 to the DC bus 11, the power load 24 is connected to the DC bus 11 via a DC/AC converter 24a. The DC/AC converter 24a converts DC power from the DC bus 11 into AC power and supplies the AC power to the power load 24. When the voltage of the DC bus 11 is lower than the abnormal level, the DC/AC converter 24a may interrupt the power supply from the DC bus 11 to the power load 24. Alternatively, a CB may be separately provided between the DC bus 11 and the power load 24. This control can avoid the blackout.

(1-4. Regarding Autonomous Cooperative Control)

Referring again to FIG. 1, as shown in FIG. 1, the DC bus 11 is connected to a local grid 17 via a switch 15 and a converter 16. The local grid 17 is an external power system, such as a power system or another power grid, capable of stably supplying power using thermal power generation, hydroelectric power generation, wind power generation, atomic power generation, or the like. The local grid 17 can not only supply power to the connected DC bus 11 but also receive surplus power from the connected DC bus 11.

When the switch 15 is turned on, the DC bus 11 and the local grid 17 are connected to each other. In the connected state, when the voltage of the DC bus 11 is lower than a certain level, power is supplied from the local grid 17 to the DC bus 11 via the converter 16. Conversely, when the voltage on the DC bus 11 is higher than a certain level, power from DC bus 11 is received by the local grid 17. The converter 16 converts DC power on a DC bus 11 side into AC power on a local grid 17 side, or converts AC power on the local grid 17 side into DC power on the DC bus 11 side.

(A) Configuration Example of Switch

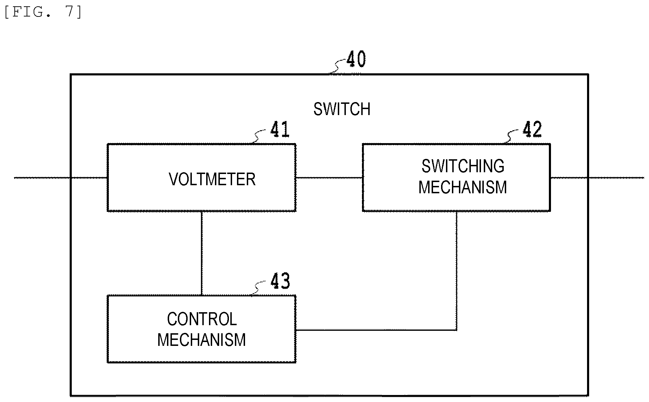

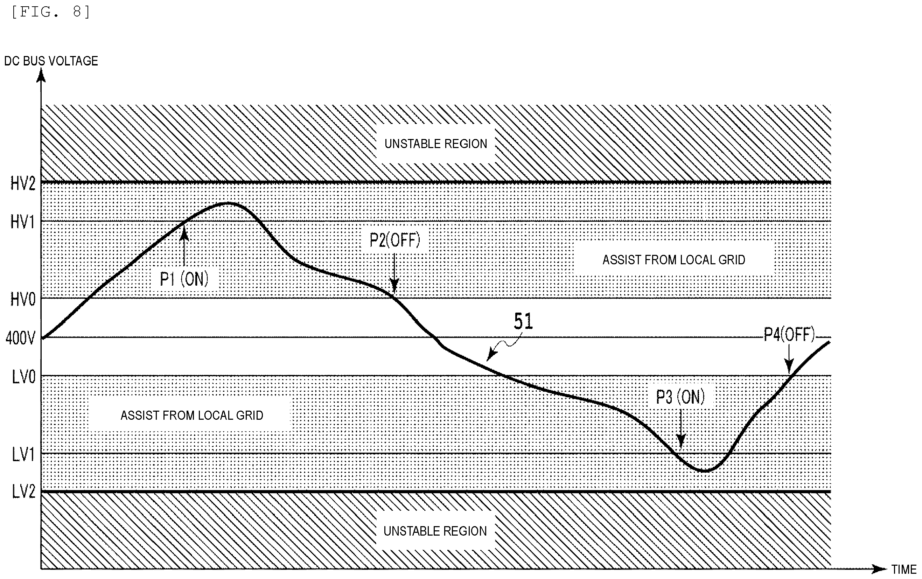

The function of the switch 15 may be implemented by, for example, a switch 40 shown in FIG. 7. FIG. 7 is a block diagram schematically showing a configuration of the switch 40. As shown in FIG. 7, the switch 40 includes a voltmeter 41, a switching mechanism 42, and a control mechanism 43. The voltmeter 41 is a unit that measures a voltage at a connection point between the DC bus 11 and the local grid 17 (a voltage monitoring point). The switching mechanism 42 switches connection and disconnection between the DC bus 11 and the local grid 17. The control mechanism 43 is a unit (for example, a control circuit) that controls a switching operation of the switching mechanism 42 based on a measurement value of the voltmeter 41. The configuration in FIG. 7 employing the voltmeter is advantageous in terms of cost compared to a case of employing a configuration of a voltage monitoring system to be described later. Details of the control by the control mechanism 43 will be described later with reference to FIG. 8.

As a modification, a function of the control mechanism 43 may be omitted, and an external voltage monitoring system that monitors the voltage at the connection point between the DC bus 11 and the local grid 17 and controls the switch 15 may be provided. In this case, the voltage monitoring system can be further modified to a mechanism for monitoring the voltages of the DC bus 11 at the connection point of each battery unit, the connection point of each generator, and the connection point of each power load. The voltage monitoring system includes a processor and a memory. Examples of the processor include a central processing unit (CPU), a digital signal processor (DSP), an application specific integrated circuit (ASIC), and a field programmable gate array (FPGA). The memory is a read only memory (ROM), a random access memory (RAM), a flash memory, or the like. For example, the processor acquires measurement data of a voltmeter provided at each connection point through a communication line, and stores the acquired measurement data in the memory.

(B) Switch Operation and Autonomous Cooperative Control Method

Next, an autonomous cooperative control method according to the embodiment of the invention will be described.

As described above, each battery unit connected to the DC bus 11 is configured such that the terminal voltage is substantially equal to the reference voltage of the DC bus 11 within a certain range of the SOC, and is controlled such that the SOC is maintained within the certain range during operation. Further, each power load connected to the DC bus 11 is configured to be freely supplied with power from the DC bus 11 as necessary within a range in which cutoff control by CB or the like does not operate. Additionally, each generator connected to the DC bus 11 autonomously operates so as to stop the power generation or interrupt the power supply when the voltage of the DC bus 11 exceeds a certain level in the case of the off-grid having no power exchange with the local grid 17. On the other hand, in the case of the on-grid capable of transmitting and receiving power to and from the local grid 17, each generator does not need to perform an autonomous operation and can cause generated power to flow to the DC bus 11 without limitation.

Since each element connected to the DC bus 11 autonomously operates, stable power supply from the DC bus 11 to each power load can be maintained to some extent even in an autonomous driving operation in an off-grid state in which the DC bus 11 is disconnected from the local grid 17. However, the voltage of the DC bus 11 may be outside the preset first voltage range due to the power generation amount by each generator, the capacity and SOC of each battery, the number and magnitude of the power loads connected to the DC bus 11, and other factors. Therefore, when the voltage of the DC bus 11 is likely to deviate from the first voltage range, the switch 15 is turned on, and the autonomous driving operation is switched to an on-grid state in which the DC bus 11 is connected to the local grid 17, and an assist control operation by the local grid 17 is performed.

Here, the control by the control mechanism 43 will be described more specifically with reference to FIG. 8. FIG. 8 is a diagram showing an example of the autonomous cooperative control method according to the embodiment of the invention. A vertical axis of the graph shown in FIG. 8 represents the voltage of the DC bus 11 at the voltage monitoring point, and a horizontal axis represents a time. LV0, LV1, LV2, HV0, HV1, and HV2 in the drawing are preset voltage threshold values. LV0 is set to a level lower than the reference voltage (400 V in this example), and LV1 is set to a level lower than LV0. On the other hand, HV0 is set to a level higher than the reference voltage, and HV1 is set to a level higher than HV0. Furthermore, the voltage range allowed in the existing power system is ±5% of the reference voltage, and an upper limit and a lower limit of the voltage range are expressed as HV2 and LV2, respectively. In order to make the electrical inertia work effectively, it is necessary to set the range (the first voltage range) from LV1 to HV1 so as to fall within a range that the terminal voltage of the battery shows a characteristic of substantially linearly changing with respect to the SOC.

In the above example, when the voltage of the DC bus 11 is about to deviate from the first voltage range, the switch 15 is turned on, and an assist operation from the local grid 17 is started. The autonomous cooperative control system 10 performs control such that the voltage of the DC bus 11 at all the time points falls within the first voltage range. However, slight undershoot and overshoot are allowed, and the voltage of the DC bus 11 at the voltage monitoring point may reach the range from HV1 to HV2 and the range from LV1 to LV2, but when the voltage of the DC bus 11 deviates from the first voltage range, assist control is performed to bring the voltage back within the first voltage range as quickly as possible. Note that the range from LV0 to HV0 is expressed as a second voltage range. The second voltage range includes the reference voltage and is within the first voltage range. Furthermore, the range from LV2 to HV2 may be expressed as a third voltage range. The third voltage range is set to a prescribed voltage range (an allowable voltage range) allowable by an existing power system (or a connected local grid). The first voltage range is set within the third voltage range.

A curve 51 in FIG. 8 represents the voltage at the connection point between the DC bus 11 and the local grid 17 (that is, the connection point between the DC bus 11 and the switch 15). In this example, initially in an off-grid autonomous driving state (a state in which the voltage of the DC bus 11 is within the second voltage range), the voltage of the DC bus 11 is near the reference voltage, but when a state continues in which power generated by all the generators (PVs and the like) in the DC 11 bus exceeds the power consumption of all the power loads, the differential power flows to the battery unit. As a result, the state of charge of the battery unit increases, and thus the terminal voltage also increases, and the voltage of the DC bus 11 increases. The voltage of the DC bus 11 increases over time, exceeds HV0, and reaches HV1 at a time point P1. As described above, when the voltage of the DC bus 11 increases and reaches HV1, the control mechanism 43 performs control to connect the DC bus 11 to the local grid 17. After the connection, surplus power is transmitted from the DC bus 11 to the local grid 17, and the voltage of the DC bus 11 starts to decrease. That is, when the converter 16 is operated such that a voltage of the converter 16 on the DC bus 11 side becomes the reference voltage (400 V in this example), a current flow from the DC bus 11 having a high voltage to the converter 16, and the voltage of the DC bus 11 which is excessively high starts to decrease.

As described above, in the autonomous cooperative control system 10, the plurality of battery units is distributed and loaded on the DC bus 11, and the electrical inertia is enhanced. Therefore, the rapid voltage increase of the DC bus 11 is prevented even when the power generation amount rapidly increases, and thereby, even when the voltage of the DC bus 11 slightly exceeds HV1 immediately before switching to the on-grid due to some reason such as transmission delay of a control signal, the voltage of the DC bus 11 is pulled back to the first voltage range and quickly returns to a level equal to or lower than HV1. In this way, by increasing the electrical inertia, a time during which the voltage of the DC bus 11 deviates from the first voltage range can be shortened. In addition, it is preferable that a time until returning to the level of HV1 or lower is within a predetermined time (for example, 1 second). That is, the autonomous cooperative control system 10 functions such that even when the voltage of the DC bus 11 deviates from the first voltage range, the voltage of the DC bus 11 does not deviate from the third voltage range and returns within the first voltage range within a predetermined time by charging from the DC bus 11 to the plurality of battery units directly connected to the DC bus 11 and the assist operation by the local grid 17.

After becoming the on-grid at the time point P1, the voltage of the DC bus 11 decreases to be lower than HV1, and further reaches HV0 at a time point P2. As described above, when the voltage of the DC bus 11 decreases and reaches HV0, the control mechanism 43 performs control to disconnect the DC bus 11 from the local grid 17 and ends the assist operation by the local grid 17.

In the example in FIG. 8, after P2 at which the assist operation ends, when a state continues in which the power generated by all the generators in the DC bus 11 is lower than the power consumption of all the power loads of the DC bus 11, the differential power is discharged from the battery unit. As a result, the state of charge of the battery decreases, and thus the terminal voltage also decreases, and the bus voltage decreases. As a result, the voltage of the DC bus 11 decreases to be lower than LV0, and an operation to reach LV1 at a time point P3 is shown. As described above, when the voltage of the DC bus 11 decreases and reaches LV1 which is the lower limit of the first voltage range, the control mechanism 43 connects the DC bus 11 to the local grid 17 and obtains the assist from the local grid 17 again. After the connection, power is supplied from the local grid 17 to the DC bus 11, and the voltage of the DC bus 11 starts to increase.

In the autonomous cooperative control system 10, since the electrical inertia is enhanced, a rapid voltage decrease of the DC bus 11 is prevented even in response to a rapid increase in the load. Therefore, even when the voltage of the DC bus 11 is slightly lower than LV1 immediately before switching to the on-grid due to some reason such as a transmission delay of a control signal, the voltage of the DC bus 11 is quickly pulled back to the first voltage range and is immediately returned to the level of LV1 or higher. In this way, by increasing the electrical inertia, the time during which the voltage of the DC bus 11 deviates from the first voltage range can be shortened. In addition, it is preferable that a time until returning to the level of LV1 or higher is within a predetermined time (for example, 1 second). That is, the autonomous cooperative control system 10 functions such that even when the voltage of the DC bus 11 deviates from the first voltage range, the voltage of the DC bus 11 does not deviate from the third voltage range and returns within the first voltage range within a predetermined time by discharging to the DC bus 11 from the plurality of battery units directly connected to the DC bus 11 and the assist operation by the local grid 17.

After becoming the on-grid at the time point P3, the voltage of the DC bus 11 increases and exceeds LV1, and further reaches LV0 at a time point P4. When the voltage of the DC bus 11 increases and reaches LV0, the control mechanism 43 disconnects the DC bus 11 from the local grid 17 and ends the assist operation by the local grid 17.

As described above, when the voltage of the DC bus 11 at the voltage monitoring point increases and reaches HV1 and when the voltage of the DC bus 11 decreases and reaches LV1, the control mechanism 43 turns on the switch 15 to connect the DC bus 11 to the local grid 17. Additionally, when the voltage of the DC bus 11 at the voltage monitoring point decreases and reaches HV0 and when the voltage of the DC bus 11 increases and reaches LV0, the control mechanism 43 turns off the switch 15 and disconnects the DC bus 11 from the local grid 17. According to these controls, the voltage of the DC bus 11 is maintained substantially within the first voltage range, and quickly converges within the first voltage range without deviating from the third voltage range even when slight overshoot or undershoot occurs. Note that control in the case of using the voltage monitoring system (a modification) is the same as described above.

<2. Stability Conditions of DC Bus Voltage>

As described above, by distributing and directly connecting the battery units to the DC bus 11, the electrical inertia is further enhanced, and the capacity of each battery unit is appropriately set to ensure a sufficient inertia duration. Therefore, in an assumed environment, stable operation of the DC bus 11 can be implemented through the autonomous cooperative control. However, stable operation conditions (stability conditions) depend on a scale of the power load loaded in the DC bus 11, a thickness (an electrical resistance) and a length of a core wire of a bus wire cable, and the like. Therefore, the stability conditions are further investigated by simulation.

(2-1. Regarding Simulation Model and Assumed Environment)

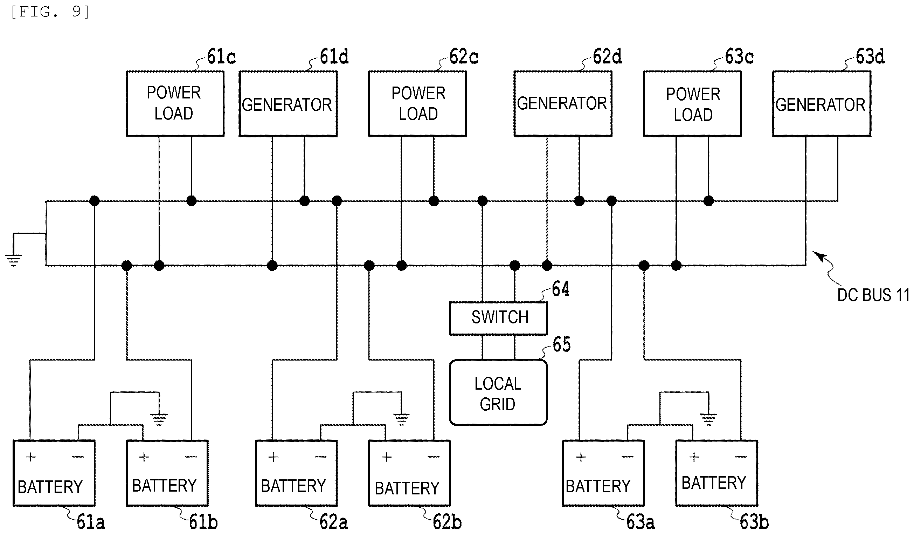

A simulation model shown in FIG. 9 is used for the simulation. FIG. 9 is a diagram showing the simulation model of the autonomous cooperative control system.

In this model, a first battery unit 61 to which batteries 61a and 61b are connected, a second battery unit 62 to which batteries 62a and 62b are connected, and a third battery unit 63 to which batteries 63a and 63b are connected are loaded on the DC bus 11. Each battery is assumed to be a lithium ion battery, includes cells whose terminal voltages are substantially equal to the reference voltage of the DC bus 11, and is operated in a region where the terminal voltage linearly changes with respect to the SOC. Power loads 61c, 62c, and 63c and generators 61d, 62d, and 63d are further loaded on the DC bus 11. The DC bus 11 is connected to a switch 64 and is configured to be connectable to a local grid 65.

Here, a distance between the first battery unit 61 and the power load 61c (a length of a power line) is denoted by L1, and a distance between the power load 61c and the generator 61d is denoted by L2. In addition, a distance between the second battery unit 62 and the generator 61d is denoted by L3, and a distance between the second battery unit 62 and the power load 62c is denoted by L4. A distance between the power load 62c and the generator 62d is denoted by L5, a distance between the generator 62d and the third battery unit 63 is denoted by L6, and a distance between the third battery unit 63 and the power load 63c is denoted by L7. Further, a distance between the power load 63c and the generator 63d is denoted by L8.

In this model, each power line of the DC bus 11 is a 5.5SQ CV cable. Furthermore, the reference voltage of the DC bus 11 is set to 400 V, a voltage of one power line is set to +200 V with respect to a ground potential, and a voltage of the other power line is set to -200 V with respect to the ground potential. Additionally, a total length of the DC bus 11 is set to 200 m, and all the distances L1 to L8 between connection points are set to 25 m. In this example, the same electrical inertia acts no matter in which power load a sudden increase in power consumption occurs.

In the simulation, stop or interruption control of each generator is omitted, and generated power from each generator is supplied to the DC bus 11 without limitation. An amount of power supplied from each generator is assumed to be an amount of power generated by a PV equivalent to an amount of sunlight in Sendai-shi, Japan in January. A power consumption by each power load is assumed to be a power consumption of a general home in Sendai-shi in January. Further, the voltage threshold values LV2, LV1, LV0, HV0, HV1, and HV2 are set to 380 V, 385 V, 395 V, 405 V, 415 V, and 420 V, respectively. A voltage range allowed in the existing power system is ±5% of the reference voltage, and the voltage threshold values HV2 and LV2 are respectively set to an upper limit value and a lower limit value of the voltage range. Although MALTAB/Simulink is used as a simulation tool, a person skilled in the art can perform additional verification of the following simulation result with any tool with reference to the above-described simulation conditions.

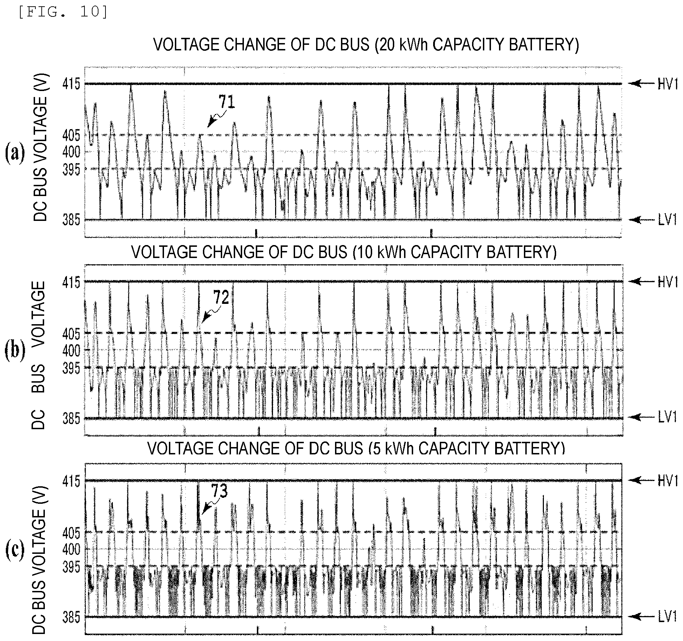

Under the control of the switch 64, a connection state between the local grid 65 and the DC bus 11 is switched by the control method shown in FIG. 8. The simulation results under the above model and environment are shown in FIG. 10. FIG. 10 is a diagram showing results of simulating a change in the DC bus voltage at a connection point with the local grid 65 for one month in January.

(2-2. Simulation Results)

A graph 71 in (a) of FIG. 10 shows a simulation result corresponding to a first scenario in which the capacity of each battery unit is set to (20/3) kWh and a total capacity of the batteries connected to the DC bus 11 is set to 20 kWh. As shown by the graph 71, the voltage of the DC bus 11 is maintained in a range between LV1 and HV1 by receiving assist from the local grid 65 as necessary. Since the battery units are distributed and loaded on the DC bus 11 and sufficient electrical inertia acts on the DC bus 11, the voltage of the DC bus 11 is normally stable without greatly deviating from the range.

A graph 72 in (b) of FIG. 10 shows a simulation result corresponding to a second scenario in which the capacity of each battery unit is set to (10/3) kWh and a total capacity of the batteries connected to the DC bus 11 is set to 10 kWh. As shown by the graph 72, the voltage of the DC bus 11 is maintained in a range between LV1 and HV1 by receiving assist from the local grid 65 as necessary. Similar to the first scenario, since the sufficient electrical inertia acts, the voltage does not deviate greatly from the range, and the voltage of the DC bus 11 is normally stable. However, since the capacity of each battery unit decreases, the second scenario receives the assist from the local grid 65 more frequently than the first scenario.

A graph 73 in (c) of FIG. 10 shows a simulation result corresponding to a third scenario in which the capacity of each battery unit is set to (5/3) kWh and a total capacity of the batteries connected to the DC bus 11 is set to 5 kWh. As shown by the graph 73, the voltage of the DC bus 11 is maintained within the range from LV1 to HV1 by receiving assist from the local grid 65 as necessary. Similar to the first scenario, since the sufficient electrical inertia acts, the voltage does not deviate greatly from the range, and the voltage of the DC bus 11 is normally stable. However, since the capacity of each battery unit further decreases, the third scenario receives the assist from the local grid 65 further more frequently than the second scenario.

From the simulation results described above, it is understood that when the battery capacity decreases, the frequency of the on-grid increases, and the frequency and time of receiving the assist from the local grid 65 increase. On the other hand, in the third scenario having the smallest battery capacity, the voltage of the DC bus 11 is recovered to the range of LV1 or higher or HV1 or lower immediately after receiving the assist from the local grid 65, and the stable operation of the DC bus 11 can be implemented. This indicates that, even when the battery unit is small, the plurality of battery units are distributed and loaded on the DC bus 11, and appropriate assist is obtained from the local grid 65, whereby the stable operation of the DC bus 11 can be implemented by the autonomous cooperative control.

However, as the scale of the power load (for example, the number of power loads connected to the DC bus 11 or the magnitude of the load) increases, a width of voltage fluctuation due to rapid fluctuations in power consumption also increases. To cope with this, it is necessary to increase the capacity of the battery loaded on the DC bus 11. However, since an increase in battery capacity leads to an increase in cost, it is necessary to find an optimum balance between the battery cost and the stability of the voltage of the DC bus. Therefore, based on the simulation model, the simulation is repeatedly executed while changing the scale of the power load and the battery capacity, and the stability condition of the DC bus is searched.

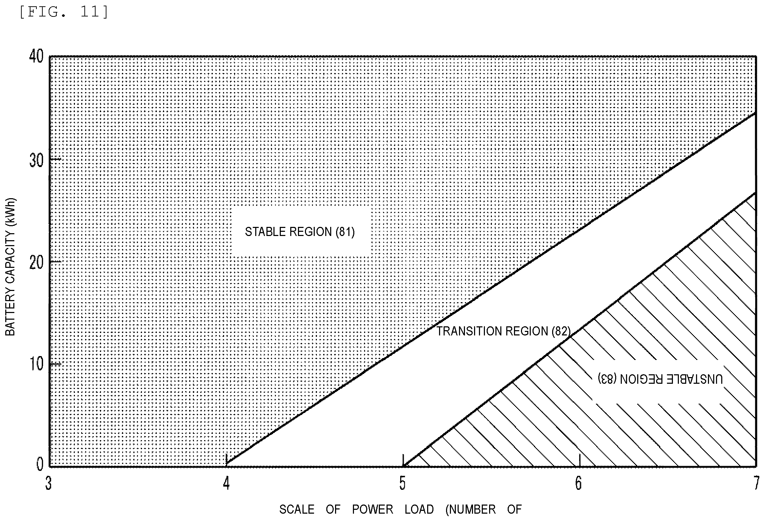

FIG. 11 is a diagram showing a stability condition of the DC bus according to the embodiment of the invention. A stable region 81 in FIG. 11 indicates a condition (a stability condition) under which the voltage of the DC bus 11 is substantially maintained within the first voltage range by receiving assist from the local grid 65 as necessary. On the other hand, an unstable region 83 indicates a condition under which the voltage of the DC bus 11 which deviates from the first voltage range cannot be recovered to within the first voltage range even after receiving assist from the local grid 65, or a condition under which even when the voltage of the DC bus 11 which deviates from the first voltage range can be recovered to within the first voltage range, it takes a very long time (a predetermined value A (for example, 60 seconds) or more). A transition region 82 is an intermediate state between the stable region 81 and the unstable region 83, and indicates a condition under which, even when the voltage of the DC bus 11 frequently deviates outside the first range and receives assist from the local grid 65, the time required for the voltage of the DC bus 11 to recover to the first voltage range is shorter than the predetermined value A but longer than a predetermined value B (for example, 1 second).

Referring to the stable region 81, it is understood that when the battery capacity is sufficiently large, the DC bus 11 can be stably operated regardless of the scale of the power load. However, from the viewpoint of cost, the battery capacity is preferably small. Therefore, focusing on a boundary between the stable region 81 and the transition region 82, it is understood that the battery capacity necessary for the stable operation of the DC bus 11 is proportional to the scale of the power load in a range where the scale of the power load is equal to or greater than a certain value (equal to or greater than 4 in this example). According to the stability condition shown in FIG. 11, the capacity of each battery unit loaded on the DC bus 11 may be set to a minimum capacity proportional to the scale of the power load, and even such small capacity battery units can maintain the stability of the DC bus 11 through distributed loading.

As described above, the stability of the DC bus 11 depends on not only the battery capacity but also the electrical inertia. The electrical inertia relates not only to the internal resistance of the battery but also to the distributed resistance of the power line. The distributed resistance of the power line increases as the distance between the connection point of the power load and the connection point of the battery unit becomes larger or as the power line becomes thinner. When the distributed resistance of the power line increases, the electrical inertia is less likely to act. Therefore, it is preferable that the distance between the connection point of the power load and the connection point of the battery unit is small and the power line is thick in order to stabilize the DC bus 11.

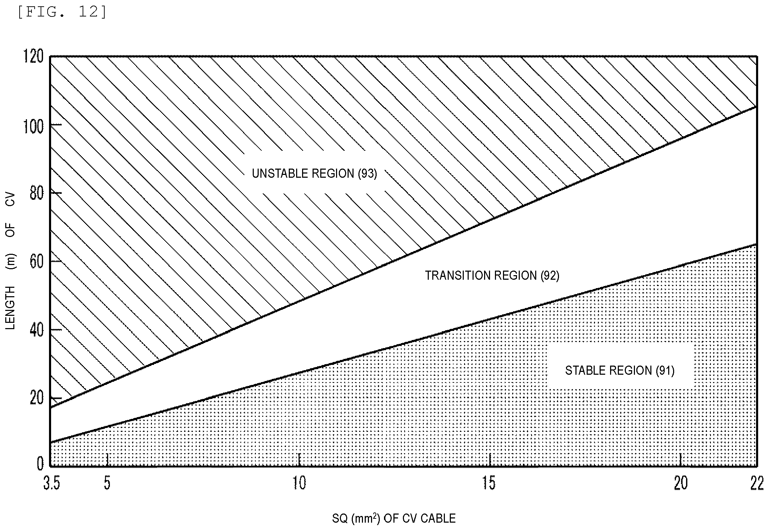

FIG. 12 is a diagram showing a stability condition of the DC bus according to the embodiment of the invention from a different viewpoint from FIG. 11. The graph in FIG. 12 is obtained by mapping a stable region 91, a transition region 92, and an unstable region 93, with a horizontal axis representing a cross-sectional area of a core wire of a CV cable used for the power line, and a vertical axis representing a length of the CV cable.

The stable region 91 indicates a condition (a stability condition) in which the voltage of the DC bus 11 is substantially maintained within the first voltage range by receiving assist from the local grid 65 as necessary. On the other hand, the unstable region 93 indicates a condition under which the voltage of the DC bus 11 which deviates from the first voltage range cannot be recovered to within the first voltage range even after receiving assist from the local grid 65 or a condition under which even when the voltage of the DC bus 11 which deviates from the first voltage range can be recovered to within the first voltage range, it takes the predetermined value A or more. The transition region 92 is an intermediate state between the stable region 91 and the unstable region 93, and indicates a condition under which, even when the voltage of the DC bus 11 frequently deviates outside the first range and receives assist from the local grid 65, the time required for the voltage of the DC bus 11 to recover to the first voltage range is shorter than the predetermined value A but longer than the predetermined value B. As can be seen from the graph in FIG. 12, the thinner and longer the CV cable is, the greater the distributed resistance of the power line becomes, and the stability of the DC bus 11 tends to decrease. Therefore, in order to ensure the stable operation of the DC bus 11, it is important to use the CV cable having a core wire as thick as possible and to keep the length of the CV cable at a certain value or less.

Table 1 below shows a relationship between the thickness of the core wire of the CV cable and the total length of the DC bus 11 in which the state of the stable region 91 can be maintained. SQ is the cross-sectional area of the core wire of the CV cable, and L is the total length of the DC bus 11. From Table 1, it is understood that the stability of the DC bus 11 can be maintained even when the total length of the DC bus 11 increases by making the core wire of the CV cable thicker. This is because when the core wire is thickened, the distributed resistance of the CV cable is reduced, and the electrical inertia acts more strongly than when the core wire is thin. That is, the total length of the DC bus 11 can increase while maintaining the stability of the DC bus 11 by making the core wire thicker and strengthening the electrical inertia.

[Table 1]

| SQ (mm²) | 2 | 3.5 | 5.5 | 8 | 14 | 22 |
|---|---|---|---|---|---|---|
| L (m) | 35 | 78 | 131 | 193 | 345 | 551 |

Although the preferred embodiment of the invention has been described above with reference to the accompanying drawings, the invention is not limited to such examples. It is apparent to those skilled in the art that various changes or modifications can be conceived within the scope of the claims, and the changes or modifications naturally belong to the technical scope of the invention.

Reference Signs List

    10 autonomous cooperative control system
    11 DC bus
    11a, 11b power line
    12a, 13a, 14a battery unit
    12b, 13b, 14b generator
    12c, 13c, 14c power load
    15 switch
    16 converter
    17 local grid

Claims

1.    An autonomous cooperative control system comprising:

    a direct current (DC) bus to which a power load and a generator are connected; and
    a plurality of battery units directly connected to the DC bus, wherein
    the plurality of battery units are distributed and loaded on the DC bus, and
    a terminal voltage of each battery unit is consistent with or approximates to a reference voltage of the DC bus.

2.    The autonomous cooperative control system according to claim 1, wherein

    when a voltage of the DC bus reaches an upper limit or a lower limit of a first voltage range from within the first voltage range centering on the reference voltage, the DC bus is connected to a local grid consisting of a power system or another power system and is switched to an assist driving state in which operation is performed with assist from the local grid,
    when the voltage of the DC bus reaches a boundary of a second voltage range within the first voltage range in the assist driving state, the DC bus is disconnected from the local grid and is switched to an autonomous driving operation in which operation is performed without the assist from the local grid, and
    in the autonomous driving operation, at least a part of the generators connected to the DC bus monitors the voltage of the DC bus and performs an autonomous operation of stopping power generation or power supply to the DC bus when the voltage of the DC bus exceeds a preset upper limit level.

3.    The autonomous cooperative control system according to claim 2, wherein
    by being directly connected to the DC bus, the plurality of battery units function to prevent a rapid voltage change of the DC bus when power consumption by the power load on the DC bus and a power generation amount by the generator rapidly increase.

4.    The autonomous cooperative control system according to claim 3, wherein
    the first voltage range is set within a third voltage range allowed by the local grid, and the autonomous cooperative control system functions such that even when the power consumption and the power generation amount rapidly increase and the voltage of the DC bus deviates from the first voltage range, the voltage of the DC bus does not deviate from the third voltage range and returns to the first voltage range within a predetermined time by the function of preventing a rapid voltage change of the DC bus by the plurality of battery units and the assist from the local grid.

5.    The autonomous cooperative control system according to claim 4, wherein
    by setting a capacity of each battery unit directly connected to the DC bus to increase in proportion to a scale of the power load connected to the DC bus, a state of a stable region in which the voltage of the DC bus does not deviate from the third voltage range and returns to the first voltage range within the predetermined time is maintained.

6. The autonomous cooperative control system according to claim 4, wherein
by setting a total length of the DC bus in the autonomous cooperative control system to increase in proportion to a cross-sectional area of a power line forming the DC bus, a state of a stable region in which the voltage of the DC bus does not deviate from the third voltage range and returns to the first voltage range within the predetermined time is maintained.

7. An autonomous cooperative control method comprising:

measuring, using a voltmeter, a voltage of a direct current (DC) bus to which a power load, a generator, and a plurality of battery units are connected, wherein the plurality of battery units is distributed and loaded on the DC bus, and a terminal voltage of each battery unit is consistent with or approximates to a reference voltage of the DC bus;
when the voltage of the DC bus reaches an upper limit or a lower limit of a first voltage range from within the first voltage range centering on the reference voltage, connecting, by a control circuit, the DC bus to a local grid consisting of a power system or another power system and switching the DC bus to an assist driving state in which operation is performed with assist from the local grid; and
when the voltage of the DC bus reaches a boundary of a second voltage range within the first voltage range in the assist driving state, disconnecting, by the control circuit, the DC bus from the local grid and switching the DC bus to an autonomous driving operation in which operation is performed without the assist from the local grid, wherein
in the autonomous driving operation, at least a part of the generators connected to the DC bus monitors the voltage of the DC bus and performs an autonomous operation of stopping power generation or power supply to the DC bus when the voltage of the DC bus exceeds a preset upper limit level.

[FIG. 1]

[FIG. 2]

EP 4 376 254 A1

[FIG. 3]

[FIG. 4]

EP 4 376 254 A1

[FIG. 5]

[FIG. 6]

[FIG. 7]

40

SWITCH

41

VOLTMETER

42

SWITCHING
MECHANISM

43

CONTROL
MECHANISM

[FIG. 8]

[FIG. 9]

61c POWER LOAD 61d GENERATOR 62c POWER LOAD 62d GENERATOR 63c POWER LOAD 63d GENERATOR

64 SWITCH

65 LOCAL GRID

DC BUS 11

BATTERY + − 61a BATTERY + − 61b BATTERY + − 62a BATTERY + − 62b BATTERY + − 63a BATTERY + − 63b

EP 4 376 254 A1

[FIG. 10]

VOLTAGE CHANGE OF DC BUS (20 kWh CAPACITY BATTERY)

VOLTAGE CHANGE OF DC BUS (10 kWh CAPACITY BATTERY)

VOLTAGE CHANGE OF DC BUS (5 kWh CAPACITY BATTERY)

EP 4 376 254 A1

[FIG. 11]

EP 4 376 254 A1

[FIG. 12]

## INTERNATIONAL SEARCH REPORT

| International application No. |
|---|
| **PCT/JP2021/033056** |

### A. CLASSIFICATION OF SUBJECT MATTER

*H02J 7/34*(2006.01)i; *H02J 1/00*(2006.01)i; *H02J 1/10*(2006.01)i; *H02J 1/14*(2006.01)i
FI: H02J1/14; H02J1/00 304H; H02J1/10; H02J7/34 B

According to International Patent Classification (IPC) or to both national classification and IPC

### B. FIELDS SEARCHED

Minimum documentation searched (classification system followed by classification symbols)

H02J7/34; H02J1/00; H02J1/10; H02J1/14

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2021-5985 A (FURUKAWA ELECTRIC CO LTD) 14 January 2021 (2021-01-14) paragraphs [0010], [0021], fig. 6 | 1 |
| Y | | 1-5, 7 |
| A | | 6 |
| Y | JP 2003-339118 A (MY WAY GIKEN KK) 28 November 2003 (2003-11-28) paragraphs [0030], [0042]-[0047], fig. 1, 17 | 1-5, 7 |
| A | | 6 |
| Y | WO 2012/144357 A1 (SHARP KK) 26 October 2012 (2012-10-26) paragraphs [0028]-[0029], [0098], fig. 1, 3 | 1-5, 7 |
| A | | 6 |
| Y | JP 2014-121185 A (MITSUBISHI ELECTRIC CORP) 30 June 2014 (2014-06-30) paragraphs [0033]-[0045], fig. 5 | 1-5, 7 |
| A | | 6 |

☑ Further documents are listed in the continuation of Box C.       ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **06 October 2021** | **19 October 2021** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

International application No.

**PCT/JP2021/033056**

**C.    DOCUMENTS CONSIDERED TO BE RELEVANT**

| Category* | Citation of document, with indication, where appropriate, of the relevant passages | Relevant to claim No. |
|---|---|---|
| Y | WO 2020/121362 A1 (MITSUBISHI ELECTRIC CORP) 18 June 2020 (2020-06-18) paragraphs [0053]-[0059], fig. 5 | 1-5, 7 |
| A | | 6 |
| Y | JP 2007-116809 A (EBARA CORP) 10 May 2007 (2007-05-10) paragraph [0008] | 5 |
| A | | 6 |
| Y | JP 2021-124752 A (NTT ANODE ENERGY CORP) 30 August 2021 (2021-08-30) paragraph [0031] | 5 |
| A | | 6 |

Form PCT/ISA/210 (second sheet) (January 2015)

**INTERNATIONAL SEARCH REPORT**
Information on patent family members

International application No.

**PCT/JP2021/033056**

| Patent document cited in search report | | | Publication date (day/month/year) | Patent family member(s) | | | Publication date (day/month/year) |
|---|---|---|---|---|---|---|---|
| JP | 2021-5985 | A | 14 January 2021 | (Family: none) | | | |
| JP | 2003-339118 | A | 28 November 2003 | CN | 101087069 | A | |
| WO | 2012/144357 | A1 | 26 October 2012 | (Family: none) | | | |
| JP | 2014-121185 | A | 30 June 2014 | (Family: none) | | | |
| WO | 2020/121362 | A1 | 18 June 2020 | (Family: none) | | | |
| JP | 2007-116809 | A | 10 May 2007 | (Family: none) | | | |
| JP | 2021-124752 | A | 30 August 2021 | (Family: none) | | | |

Form PCT/ISA/210 (patent family annex) (January 2015)

**EP 4 376 254 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014128047 A

**Non-patent literature cited in the description**

- **FAHAD SALEH AL-ISMAIL.** DC Microgrid Planning, Operation, and Control: A Comprehensive Review. *IEEE Access,* vol. 9, 36154-36172